# EUROPEAN PATENT SPECIFICATION

(11) **EP 0 580 379 B1**
(45) Date of publication and mention of the grant of the patent: **16.09.1998**
(21) Application number: 93305632.7
(22) Date of filing: 19.07.1993
(51) Int. Cl.: G11B 23/03

(54) **Disc cartridge**
Plattenkassette
Cassette à disque

(30) Priority: 23.07.1992 JP 216620/92
(43) Date of publication of application: 26.01.1994
(73) Proprietor: SONY CORPORATION, Tokyo (JP)
(72) Inventor: Kobayashi, Shinkichi, c/o Intel. Prop. Division, Shinagawa, Tokyo 141 (JP); Saeki, Yoshio, c/o Intel. Prop. Division, Shinagawa, Tokyo 141 (JP)
(74) Representative: Cotter, Ivan John

(56) References cited:
- EP-A- 277 809
- EP-A- 295 025
- EP-A- 472 443
- EP-A- 494 794
- EP-A- 526 222
- DE-U- 9 201 969
- US-A- 5 121 277
- PATENT ABSTRACTS OF JAPAN vol. 011, no. 107 (P-563)4 April 1987 & JP-A-61 255 570 ( HITACHI MAXELL ) 13 November 1986

## Description

The present invention relates to a disc cartridge.

More particularly, the present invention relates to a disc cartridge in which an optical disc is rotatably contained in a cartridge main body.

In general, a disc cartridge has a cartridge main body and a shutter member. The cartridge main body is formed by abutting and interconnecting first and second halves. The information signals recorded on an optical disc rotatably contained in the cartridge main body may be read using an optical head provided within a reproducing apparatus. To this end, the disc cartridge has an aperture for exposing the optical disc to the optical head.

With such a disc cartridge, should the aperture be left open, the optical disc contained within the cartridge main body remains partially exposed to outside. Consequently, dust and dirt may be deposited on the optical disc with resultant damage to the optical disc. Thus, the aperture is provided with a shutter member for closing the aperture when the disc cartridge is not in use and hence is not loaded on the reproducing apparatus, such as during storage. The shutter member is supported for movement along the outer lateral side of the cartridge main body for opening and closing the aperture. The shutter member is formed by bending a metallic plate of a reduced thickness by a metallic mould. The shutter member includes a plate section for closing the aperture in the disc cartridge and a web section acting as a slide guide. The web section is provided at the proximal side of the plate section and has an engaging part engaged with a groove formed in a lateral side of the cartridge main body.

The plate section is formed as a rectangle of a size sufficient to close the aperture and is movable along the outer lateral surface of the half having the aperture. On the other hand, the web section is formed for extending along the lateral side of the cartridge main body and has an engaging part engaged in a groove formed in the lateral side of the cartridge main body.

A disc cartridge provided with a shutter member associated only with one of the halves is described in JP Patent KOKAI Publication No.61-255570 (1986). With this disc cartridge, the plate section is provided with a pawl engaged with a groove formed in the outer lateral side of the cartridge main body for preventing the shutter member from becoming detached from the plate section. Such pawl is provided obliquely at a certain predetermined angle with respect to the plate section for assuring reliable prevention of detachment of the shutter member from the cartridge main body. However, as the pawl is formed obliquely with respect to the plate section, the metallic mould used for fabricating the shutter member becomes complex to manufacture. Above all, should burrs be produced at the distal end of the pawl, the halves tend to be scraped away by these burrs during movement of the shutter member.

European Specification No. 0 494 794 discloses a disc cartridge and a shutter having a substantially U-shaped cross-section. The shutter has a pair of barbed tongues that engage with a groove formed by the two halves of the cartridge. The shutter extends over both major surfaces of the cartridge.

European Specification No. 0 472 443 discloses a disc cartridge and a shutter having a pair of planar portions that extend over both major surfaces of the cartridge. The shutter has a pair of locating tabs which locate in a groove to secure the shutter to the cartridge.

German Utility Model No. 9201969.2 discloses a cartridge shutter which has a substantially U-shaped cross-section and extends over both major surfaces of the cartridge. The shutter has four locating tabs which secure the shutter to the cartridge.

European Specification No. 0 295 025 discloses a disk cartridge and a shutter having a U-shaped cross-section. The shutter has a pair of barbed tongues that engage with a groove formed by the two halves of the cartridge. The shutter extends over both major surfaces of the cartridge.

European Specification No. 0 526 222 discloses a cartridge having a U-shaped shutter that extends over both major surfaces of the cartridge. The shutter is provided with a set of tabs that engage with grooves in the cartridge to secure the shutter thereto.

Published Japanese Specification No. 61-255,570 discloses a shutter that extends over both major surfaces of a disc cartridge and is snap-fittable thereon. A protrusion mates with a groove to hold the shutter on the cartridge.

According to the present invention, there is provided a disc cartridge comprising: a first half (5); a second half (6) connected to the first half (5), the second half being formed with a first aperture (7) through which a light beam from an optical head can be passed and a second aperture (3) through which a drive means for rotating a disc provided in the cartridge can be introduced, the second half being formed with an upstanding wall section (6c) extending from the inner surface thereof and along a lateral side thereof and a groove (23) formed in the outer surface of the second half (6), an upper surface of the upstanding wall section and the inner surface of the first half defining therebetween a groove (16) open at one end; and a shutter (14) having a plate section (15) movable to open and close the first aperture (7), a connecting section (20) extending substantially perpendicularly from the plate section (15), and at least one engaging portion (17,18,19) extending substantially perpendicularly from the connecting section (20) towards the plate section (15); and a pair of lugs (21,22) extending from the plate portion (15) towards the at least one engaging portion (17, 18, 19); characterised in that the plate section (15) is substantially T-shaped, said lugs (21,22) extending from respective arm portions of the T-shaped plate section (15); and the shutter (14) is moveably mounted only on the second half (6), is resiliently flexible about the connecting section (20) and snap-fittable on the second half (6), the shutter being retained upon the second half (6) by virtue of the gripping and sliding abutment of the at least one engaging portion (17,18,19) on the upper surface of the upstanding wall section (6c), the gripping and sliding abutment of the plate portion (15) on a major surface (6e) of the second half (6) and the gripping and sliding abutment of the lugs (21,22) on a wall of the groove (23).

The shutter member may be reliably mounted on the cartridge main body to provide its stable movement.

The invention will now be more particularly described, by way of illustrative and non-limiting example, with reference to the accompanying drawings, in which:

Fig.1 is a perspective view of a disc cartridge, as viewed from the side upper half.

Fig.2 is a perspective view of the disc cartridge shown in Fig.1, as viewed from the side lower half.

Fig.3 is an exploded perspective view of the disc cartridge shown in Fig.1.

Fig.4 is an enlarged front view showing a shutter member.

Fig.6 is an enlarged plan view of the shutter shown in Fig.4.

Fig.7 is an enlarged side view showing the shutter member mounted on the cartridge main body, with portions being broken away.

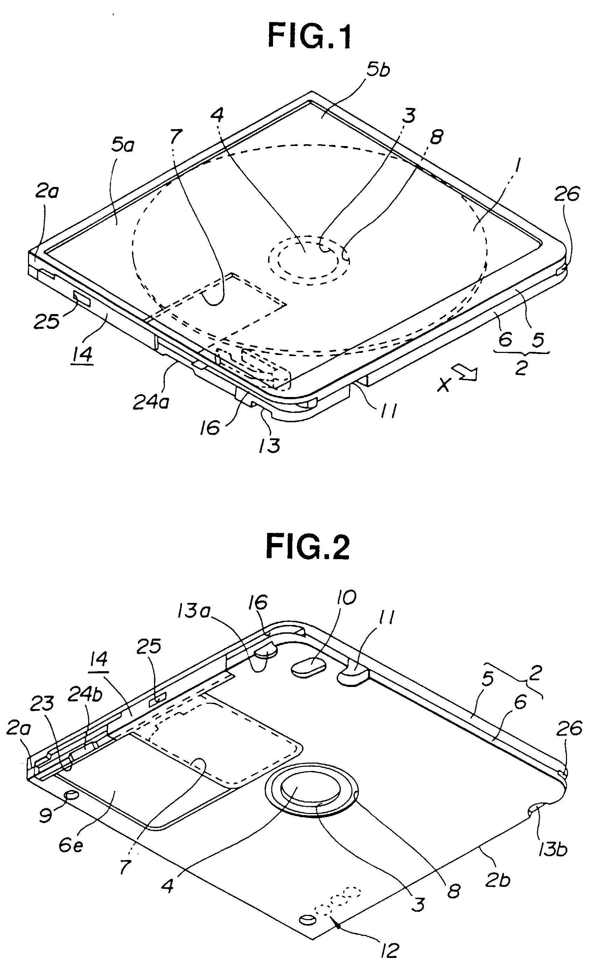

Referring to Figs. 1, 2 and 3, a disc cartridge includes a cartridge main body 2 rotatably containing an optical disc 1, and a shutter member 14. The optical disc 1 includes a disc substrate, a recording layer and a protective layer. The disc substrate is formed as a disk from a transparent synthetic resin, such as polycarbonate. The recording layer is formed of a metallic material, such as aluminum, deposited on one of the major surfaces of the disc substrate. A pattern of micro-irregularities or pits, corresponding to information signals, are formed on the major surface of the disc substrate. The information signals may be read by radiating a laser beam to the pattern of the micro-irregularities from the opposite major surface of the disc substrate and detecting the intensity of the laser beam reflected back from the pattern. A protective layer of a UV curable resin is formed on the recording layer for protecting the recording layer. In the present embodiment, an optical disc having a diameter of 64 mm and carrying approximately 72 minutes of musical signals thereon is employed as the optical disc 1.

The central portion of the optical disc 1 is formed with a clamping section adapted for being clamped by a driving device provided in the reproducing apparatus for rotating the disc. The clamping section has a circular centring opening 3 formed at the centre of the disc substrate and a clamping plate 4 formed by a disk-shaped metallic plate for closing the centre opening 3.

The cartridge main body 2 is made up of an upper half 5 and a lower half 6 in the form of rectangles abutted to each other to constitute a thin casing dimensioned for rotatably containing the optical disc 1 therein. The upper and lower halves 5, 6 are formed of synthetic resin.

Since the disc cartridge of the illustrated embodiment is used exclusively for replay, the upper half 5 is not provided with the aperture for exposing the major surface of the optical disc 1 having the signal recording layer to outside. Instead, a recess 5a for printing or bonding a label or the like thereto is formed in the major surface 5a of the upper half 5. The upper half 5 has its lateral side 5c higher in height than its remaining lateral sides. The lateral side 5c is a region for bonding a label or the like thereto. The portion of the lower half 6 connected to the lateral side 5c is not formed with a corresponding lateral side. That is, the lateral side 5c is formed with a thickness equal to that of the cartridge main body 2.

The inner surface of the upper half 5 is formed with an annular rib 6a of the lower half 6 as later described, and an engaging section, not shown, adapted for being engaged with a boss 6d of the lower half 6. One of the lateral sides of the upper half 5 is formed with a stepped part 26a defining a mistaken insertion inhibiting slot 26 as later described. The end face of the annular rib 5d is caused to bear on the end face of the annular rib 6a of the lower half 6. Thus the annular rib 5d defines a housing space for the optical disc 1 in cooperation with the annular rib 6a.

The lower half 6 is formed with a first aperture 7 facing the optical head of the reproducing apparatus and a second aperture 8 via which the disc rotationally driving device of the reproducing apparatus is to be introduced. The first aperture 7 is formed substantially as a rectangle extending from the centre of the lower half 6 towards the lateral side of the lower half 6. The second aperture 8 is formed as a circular opening at the centre of the lower half 6.

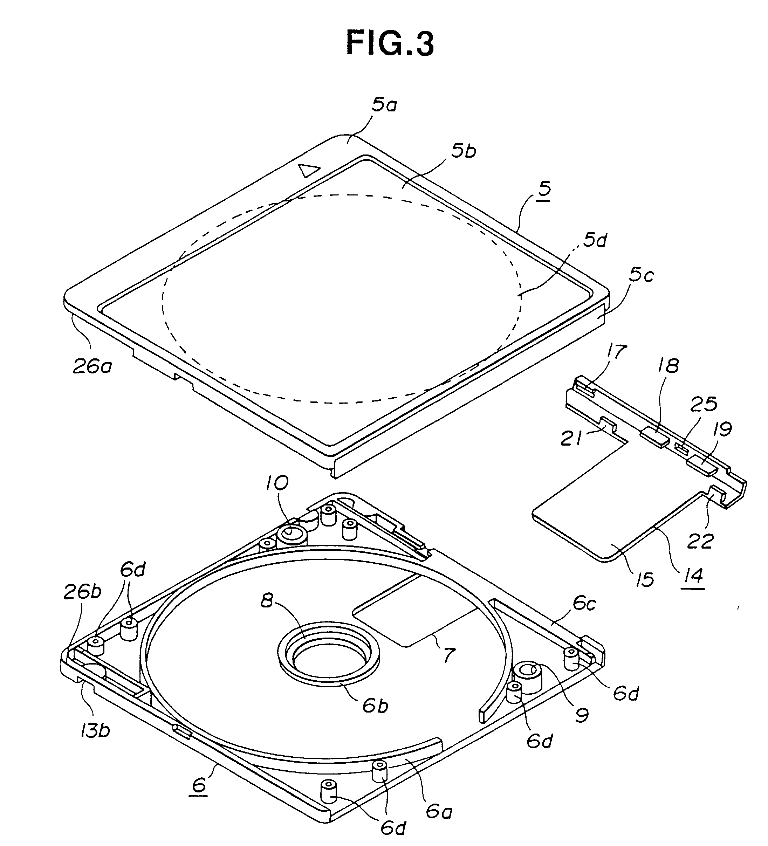

The second aperture 8 is formed as a circular opening of a size large enough to expose the centre opening 3 and the clamping plate 4 of the optical disc 1 contained in the cartridge main body 2. The second aperture 8 is faced by the disc rotationally driving device adapted for magnetically attracting the clamping plate 4 of the optical disc 1 contained in the optical disc 1 for rotationally driving the optical disc. An annular protrusion 6b is formed for extending along the rim of the second aperture 8. When the disc cartridge is not in use, the annular protrusion 6b supports the outer rim of the central opening 3 of the optical disc 1. An annular rib 6a, an upstanding wall section 6c and a plurality of bosses 6d are formed for being protruded from the inner surface of the lower half 6. The annular rib 6a defined the space for accommodating the optical disc 1 in cooperation with the annular rib 5a of the upper half 5, as described above. The upstanding wall 6c is formed extending along one of the lateral sides of the lower half 6. It is on this upstanding wall 6c that engaging sections 18, 19 of the shutter member 14 as later described are slid. The bosses 6d are engaged with mating engaging sections of the upper half 5. The upper and lower halves 5 and 6 are ultrasonically welded to each other with the bosses 6d engaging with the mating engaging section of the upper half 5. The lower half 6 is surrounded on its three sides by wall sections and opened on its one side, as shown in Fig.3. The lateral side 5c of the upper half 5 is caused to bear on this open side. The stepped portion 26b defining the mistaken insertion inhibiting slot 26 as later explained is formed in one of the lateral sides of the lower half 6. The inner surface of the upper half 5 and the upstanding wall section 6c of the lower half 6 delimit a guide groove 16 as will be explained later.

The outer surface of the lower half 6 is formed with a recess 6e of a depth substantially equal to the thickness of the plate section 15 of the shutter member 14 and a groove 23 engaged by lugs 21, 22 of the shutter 14. The recess 6e is formed in the outer surface of the lower half 6 over a range of movement of the shutter member 14. The groove 23 is formed for extending along one of the lateral sides of the lower half 6. The lower half 6 is formed with two tapered portions 24a, 24b between the groove 23 and the outer edge of the lower half 6, as shown in Figs.1 and 2. These tapered portions 24a, 24b are inclined surfaces inclined towards the groove 23 and the outer edge of the lower half 6. The distance between these tapered portions 24a, 24b is approximately equal to the distance between the lugs 21 and 22 of the shutter member 14, while the width of each of the tapered sections 24a, 24b is wider than the width of each of the lugs 21, 22.

The lower half 6 is provided with two positioning holes 9, 10 for positioning the disc cartridge in respect to the reproducing apparatus. These positioning holes 9, 10 are provided along a straight line extending from the upstream side towards the downstream side in the direction of insertion of the disc cartridge. The positioning holes 9 and 10 are elliptical and circular in profile, respectively. The reproducing apparatus is provided with positioning pins, not shown, having conical distal ends for loading the disc cartridge in position on the reproducing apparatus.

The lower half 6 is also provided with an adjustment recess 11 for controlling the height of a magnetic head enclosed within a recording and/or reproducing apparatus in order to permit the disc cartridge to be reproduced by the recording and/or reproducing apparatus. The adjustment recess 11 is formed as a circular recess by partially removing the inserting lateral side of the disc cartridge.

The lower half 6 is also provided with a plurality of recording medium discriminating holes 12 for discriminating the types of the optical discs 1 contained within the cartridge main body 2. These discriminating holes 12 are provided as small circular openings on a straight line at a corner of the lower half 6 at the downstream side relative to the inserting direction of the disc cartridge into the reproducing apparatus.

The lower half 6 is also provided with cutouts 13a, 13b which may be used for securing the disc cartridge within a storage rack or as engagement sections when taking out the disc cartridge by an automatic exchanging apparatus (so-called auto-changer). These cutouts 13a, 13b are provided at the lateral side 2a provided with the shutter 14 and at the opposite lateral side 2b of the cartridge main body 2. That is, these cutouts 13a, 13b are formed as arcuate recesses at the position proximate to the inserting lateral side of the disc cartridge by partially removing the lateral side 2a and the opposite lateral side 2b of the cartridge main body 2.

The lower half 6 is also formed with a mistaken insertion inhibiting groove 26 for preventing mistaken insertion of the disc cartridge into the reproducing apparatus. This groove 26 is formed from the front side up to an intermediate portion in the lateral side 2b opposite to the lateral side 2a of the cartridge main body 2 provided with a guide groove 16 as later explained. In other words, the mistaken insertion inhibiting groove 26 is shorter in length than the guide groove 16. Should the disc cartridge be inserted in a mistaken condition, such as in a upside down position, into the reproducing apparatus, the shutter opening member of the reproducing apparatus is engaged with the mistaken insertion inhibiting groove 26. Since the shutter opening member is caused in such case to bear on the terminal end of the mistaken insertion inhibiting groove 26, the disc cartridge cannot be introduced further to prevent mistaken insertion of the disc cartridge.

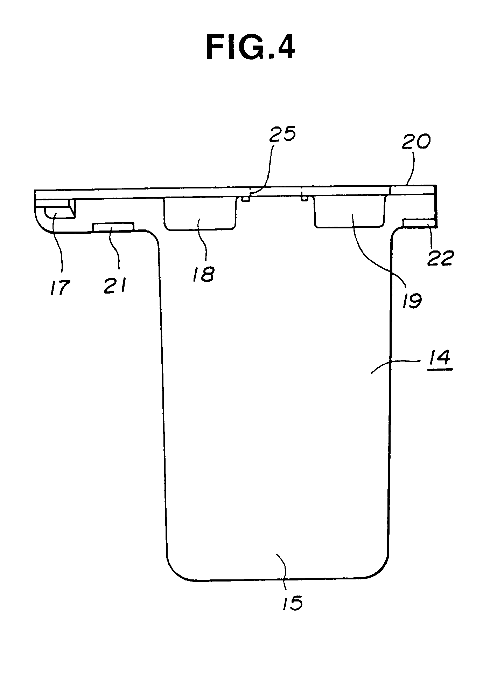

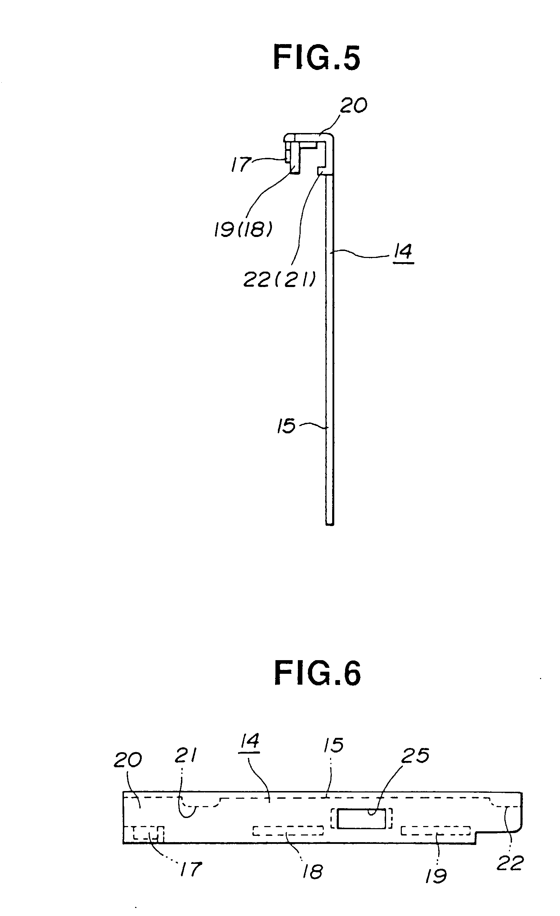

The shutter member 14 for opening and closing the first aperture 7 is mounted on the lower half 6 for movement along the outer lateral side 6a thereof. The shutter member 14 is moulded integrally of synthetic resin such as by injection moulding. As shown in Figs.3 to 6, the shutter member 14 is made up of a plate section 15 for opening and closing the first aperture 7, engaging sections 17, 18 and 19 formed in the lateral side 2a of the cartridge main body 2 for engaging with the guide groove 16 and a connecting section which is contiguous to the plate section 15 and on which the engaging sections 17 to 19 are formed. The engaging sections 17 to 19 and the plate section 15 are interconnected by the connecting section 20 in the form of a letter U.

The plate section 15 includes a rectangular portion of a size at least large enough to cover the first aperture 7 and has its proximal side contiguous to the connecting section 20 extended along the sliding direction of the shutter member so that the plate section in its entirety has the shape of a letter T. The arm sections of the letter T are formed with the lugs 21, 22 for preventing the shutter member 14 from being disengaged from the lower half 6. These lugs 21, 22 are formed on the arm sections on both sides of the rectangular portion of the plate section for extending at right angles to the plate section 15. These lugs 21, 22 are adapted for being engaged in the groove 23 formed in the outer lateral side 6a of the lower half 6 for extending in the sliding direction of the shutter member 14. The groove 23 is formed adjacent the guide groove 16 in the lower half 6 at a position facing the lugs 21, 22 for extending at right angles to the surface of the lower half 6.

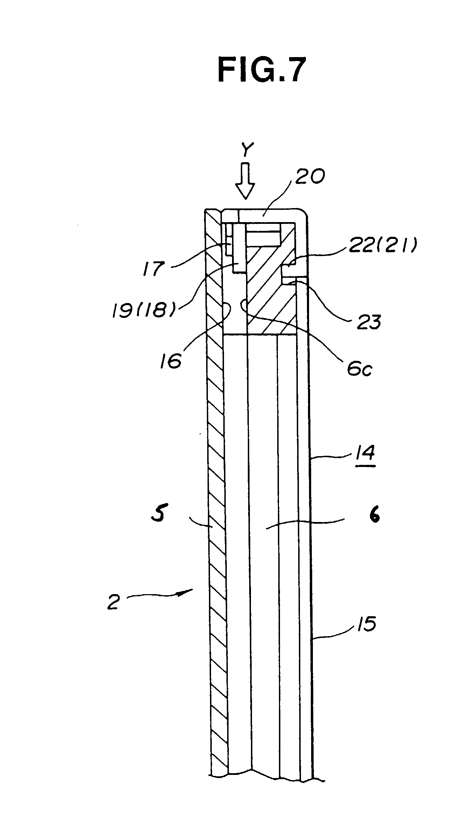

The engaging sections 17 to 19 are adapted for supporting the shutter member 14 for movement relative to the lower half 6 and are formed for facing the guide groove 16 formed in the lateral side 2a of the cartridge main body 2. The engaging sections 17 to 19 are provided at the mid part and towards both ends of the connecting section 20 as tongues extending down from the side edge of the web section 20 into the guide groove 16. These engaging sections 17 to 19 are adapted for being slid against the upstanding wall section 6c of the lower half 6, as shown in Fig.7.

The connecting section 20 plays the role of interconnecting the plate section 15 and the engaging sections 17 to 19, and is extended parallel to the lateral side 2a of the cartridge main body 2. The connecting section 20 is provided with an operating opening 25 engaged by a shutter closure member provided on the reproducing apparatus for closing the shutter member 14. The operating opening 25 is formed as a rectangular opening at a mid portion of the connecting section 20.

The upper and lower halves 5, 6 are assembled together to form the cartridge main body and the shutter member 14 is mounted on the resulting cartridge main body 2 in the following manner. The optical disc 1 is placed in the region defined by the annular rib 6a of the lower half 6 and the upper half 5 is placed in register on the cartridge half 6 and welded thereto by a welding method such as ultrasonic welding. The cartridge main body 2, completed in this manner, has the guide groove 16 in its lateral side 2a and the mistaken insertion inhibiting groove 26 on its lateral side opposite and parallel to the lateral side 2a.

The shutter member 14 is thrust in this state into the cartridge main body 2 as shown by an arrow Y in Fig.7, so that the engaging sections 17 to 19 of the shutter member 14 are intruded into the guide groove 16 and the lugs 21, 22 are in register with the taper sections 24a and 24b of the lower half 6. The result is that the lugs 21, 22 are moved to follow the tilt of the taper sections 24a, 24b to cause resilient flexure of the shutter 14 member, with the lugs 21, 22 then riding over the taper sections 24a, 24b into engagement with the groove 23. In this manner, the shutter member 14 is mounted on the cartridge main body 2 for movement along the lateral side 2a of the cartridge main body 2.

That is, the shutter member 14 is mounted for movement relative to the cartridge main body 2, by having its engaging sections 17 to 19 engaged in the guide groove 16 formed in the lateral side 2a of the cartridge main body 2 and by having its lugs 21, 22 engaged in the groove 23 formed in the outer lateral side 6a of the lower half 6, as shown in Fig.7. The shutter member 14 is moved between a position of opening the first aperture 7 of the cartridge main body 2 shown in Fig.1 and a position of closing the aperture 7.

Since the lugs 21, 22 are formed for extending at right angles to the plate section 15, they are engaged positively in the groove 23 to prevent the shutter member 14 from being disengaged from the cartridge main body 2. Since the groove 23 is formed for extending at right angles to the outer lateral side 6a of the lower half 6, smooth movement of the shutter member 14 is assured. The shutter member 14 is formed of synthetic resin so that there is no risk of the lugs 21, 22 being caught by the groove 23 during sliding of the shutter member 14 to scrape off the material from around the groove 23. The lugs 21, 22 are formed for extending at right angles to the plate section 15 and thus located in a manner free from obstructive objects when seen in plan to facilitate the preparation of a metallic mould used for producing the shutter member 14. The shutter member 14 is cast integrally from the resin material and hence exhibits resiliency so that it may be mounted easily on the cartridge main body 2 simply by being thrust in a direction shown by arrow Y in Fig.7.

Although the foregoing description has been made of the disc cartridge including the read-only optical disc 1 contained in the cartridge main body 2, the present invention may similarly be applied with comparable operation and results to a disc cartridge containing a magneto-optical disc.

## Claims

1. A disc cartridge comprising:
a first half (5);
a second half (6) connected to the first half (5), the second half being formed with a first aperture (7) through which a light beam from an optical head can be passed and a second aperture (3) through which a drive means for rotating a disc provided in the cartridge can be introduced, the second half being formed with an upstanding wall section (6c) extending from the inner surface thereof and along a lateral side thereof and a groove (23) formed in the outer surface of the second half (6), an upper surface of the upstanding wall section and the inner surface of the first half defining therebetween a groove (16) open at one end; and
a shutter (14) having a plate section (15) movable to open and close the first aperture (7), a connecting section (20) extending substantially perpendicularly from the plate section (15), and at least one engaging portion (17,18,19) extending substantially perpendicularly from the connecting section (20) towards the plate section (15); and a pair of lugs (21,22) extending from the plate portion (15) towards the at least one engaging portion (17, 18, 19);
characterised in that the plate section (15) is substantially T-shaped, said lugs (21,22) extending from respective arm portions of the T-shaped plate section (15); and
the shutter (14) is moveably mounted only on the second half (6), is resiliently flexible about the connecting section (20) and snap-fittable on the second half (6), the shutter being retained upon the second half (6) by virtue of the gripping and sliding abutment of the at least one engaging portion (17,18,19) on the upper surface of the upstanding wall section (6c), the gripping and sliding abutment of the plate portion (15) on a major surface (6e) of the second half (6) and the gripping and sliding abutment of the lugs (21,22) on a wall of the groove (23).

2. A disc cartridge according to Claim 1, wherein the shutter (14) is made of synthetic resin.

3. A disc cartridge according to Claim 1 or Claim 2, wherein the lugs (21,22) extend substantially perpendicularly from the plate section (15).

4. A disc cartridge according to any of Claims 1 to 3, wherein an edge of the major surface of the second half (6) closest to the groove is provided with a pair of bevelled portions (24a,24b), the bevelled portions being separated by a distance corresponding to the distance between the lugs (21,22) and being provided to facilitate snap-fitting of the shutter onto the second half (6).

## Patentansprüche

1. Plattenkassette, mit:
einer ersten Gehäusehälfte (5);
einer zweiten Gehäusehälfte (6), die mit der ersten Gehäusehälfte (5) verbunden ist, wobei die zweite Gehäusehälfte eine erste Öffnung (7) aufweist, durch die ein Lichtstrahl von einem optischen Kopf laufen kann, und eine zweite Öffnung (3), durch die eine Antriebseinrichtung zum Drehen einer Platte, die in der Kassette vorgesehen ist, eingeführt werden kann, wobei die zweite Gehäusehälfte eine aufrecht stehende Wand (6c) aufweist, die sich von ihrer Innenfläche und längs ihrer seitlichen Seite ausdehnt, und eine Nut (23), die in der äußeren Fläche der zweiten Gehäusehälfte (6) gebildet ist, wobei zwischen einer oberen Fläche der aufrecht stehenden Wand und der inneren Fläche der ersten Gehäusehälfte eine Nut (16) begrenzt wird, die an einem Ende offen ist; und
einem Verschluß (14), der eine Platte (15) aufweist, die verschiebbar ist, um die erste Öffnung (7) zu öffnen und zu verschließen, einen Verbindungsabschnitt (20), der sich im wesentlichen senkrecht von der Platte (15) erstreckt, und zumindest ein Eingriffsteil (17, 18, 19), das sich im wesentlichen senkrecht vom Verbindungsabschnitt (20) in Richtung auf die Platte (15) erstreckt; und ein Ansatzpaar (21, 22), das sich von der Platte (15) in Richtung auf das zumindest eine Eingriffsteil (17, 18, 19) erstreckt;
**dadurch gekennzeichnet, daß**
die Platte (15) in etwa T-förmig ist, wobei sich die Ansätze (21, 22) von jeweiligen Armen der T-förmigen Platte (15) erstrecken; und
der Verschluß (14) nur auf der zweiten Gehäusehälfte (6) verschiebbar befestigt ist, um den Verbindungsabschnitt herum (20) federnd flexibel ist und auf der zweiten Gehäusehälfte (6) durch Aufschnappen montierbar ist, wobei der Verschluß auf der zweiten Gehäusehälfte (6) mittels des Greif- und Gleitgegenlagers des zumindest einen Eingriffsteils (17, 18, 19) auf der oberen Fläche der aufrecht stehenden Wand (6c), des Greif- und Gleitgegenlagers der Platte (15) auf der Hauptfläche (6e) der zweiten Gehäusehälfte (6) und des Greif- und Gleitgegenlagers der Ansätze (21, 22) auf einer Wand der Nut (23) gehalten wird.

2. Plattenkassette nach Anspruch 1, wobei der Verschluß (14) aus Kunststoff hergestellt ist.

3. Plattenkassette nach Anspruch 1 oder 2, wobei die Ansätze (21, 22) sich in etwa senkrecht von der Platte (15) erstrecken.

4. Plattenkassette nach einem der Ansprüche 1 bis 3, wobei ein Rand der Hauptfläche der zweiten Gehäusehälfte (6) am nächsten zur Nut zwei paarweise angeordnete, abgeschrägte Bereiche (24a, 24b) hat, wobei die abgeschrägten Bereiche um einen Abstand getrennt sind, der dem Abstand zwischen den Ansätzen (21, 22) entspricht und dazu vorgesehen ist, die Schnappmontage des Verschlusses auf der zweiten Gehäusehälfte (6) zu erleichtern.

## Revendications

1. Cassette à disque comprenant:
une première moitié (5);
une seconde moitié (6) connectée à la première moitié (5), la seconde moitié étant formée avec une première ouverture (7) à travers laquelle peut passer un faisceau lumineux provenant d'une tête optique et une seconde ouverture (3) à travers laquelle peut être introduit un moyen d'entraînement pour faire tourner un disque prévu dans la cassette, la seconde moitié étant formée avec une partie à paroi droite (6c) s'étendant à partir de sa surface intérieure et le long de l'un de ses côtés latéraux et une rainure (23) formée dans la surface extérieure de la seconde moitié (6), une surface supérieure de la partie à paroi droite et la surface intérieure de la première moitié définissant entre elles une rainure (16) ouverte à une extrémité; et,
un obturateur (14) comportant une partie à plaque (15) mobile pour ouvrir et fermer la première ouverture (7), une partie de connexion (20) s'étendant sensiblement perpendiculairement à la partie à plaque (15), et au moins une partie d'engagement (17, 18, 19) s'étendant sensiblement perpendiculairement à la partie de connexion (20) vers la partie à plaque (15); et une paire de pattes (21,22) s'étendant à partir de la partie à plaque (15) vers la au moins une partie d'engagement (17,18,19);
caractérisée en ce que la partie à plaque (15) est sensiblement en forme de T, lesdites pattes (21,22) s'étendant à partir de parties en bras respectives de la partie à plaque (15) en forme de T; et,
l'obturateur (14) n'est monté de façon mobile que sur la seconde moitié (6), est souple de façon élastique autour de la partie de connexion (20) et peut être fixé par pression sur la second moitié (6), l'obturateur étant maintenu sur la seconde moitié (6) grâce à l'appui avec adhérence et glissement de la au moins une partie d'engagement (17,18,19) sur la surface supérieure de la partie à paroi droite (6c), l'appui avec adhérence et glissement de la partie à plaque (15) sur une surface principale (6e) de la seconde moitié (6) et l'appui avec adhérence et glissement des pattes (21,22) sur une paroi de la rainure (23).

2. Cassette à disque selon la revendication 1, dans laquelle l'obturateur (14) est composé de résine synthétique.

3. Cassette à disque selon la revendication 1 ou la revendication 2, dans laquelle les pattes (21,22) s'étendent sensiblement perpendiculairement à la partie à plaque (15).

4. Cassette à disque selon l'une quelconque des revendications 1 à 3, dans laquelle un bord de la surface principale de la seconde moitié (6) le plus proche de la rainure est prévu avec une paire de portions biseautées (24a, 24b), les portions biseautées étant séparées d'une distance correspondant à la distance entre les pattes (21,22) et étant prévues pour faciliter une fixation par pression de l'obturateur sur la seconde moitié (5).
